# EUROPEAN PATENT APPLICATION

(11) **EP 2 960 831 A1**
(43) Date of publication of application: **30.12.2015**
(21) Application number: 15173966.1
(22) Date of filing: 26.06.2015
(51) Int. Cl.: G06K 9/46, G07G 1/00

(54) **INFORMATION PROCESSING APPARATUS AND INFORMATION PROCESSING METHOD**

(30) Priority: 27.06.2014 JP 2014133051
(71) Applicant: Toshiba TEC Kabushiki Kaisha, Tokyo 141-0032 (JP)
(72) Inventor: MIYAKOSHI, Hidehiko, Shinagawa-ku, Tokyo 141-0032 (JP)
(74) Representative: Takeuchi, Maya

(57) **Abstract**

In accordance with an embodiment, an information processing apparatus comprises on representing the feature of a non-target object, different from a prescribed target object, which is contained in an image capturing range of an image capturing module for photographing the prescribed target object; an elimination module configured to eliminate an area specified with the elimination information stored in the storage module from an image obtained by photographing the target object with the image capturing module; an extraction module configured to extract a feature amount of the image from which the area is eliminated; and a dictionary registration module configured to register the feature amount extracted by the extraction module in a dictionary as a reference data.

## Description

### FIELD

Embodiments described herein relate generally to an information processing apparatus and an information processing method.

### BACKGROUND

Conventionally, there is a general object recognition technology in which feature amount of a target object extracted from an image captured by photographing the target object is compared with reference data (feature amount) stored in a dictionary beforehand to obtain a similarity degree therebetween, and the category of the target object is recognized according to the similarity degree. Moreover, a store system in which such a general object recognition technology is applied to the recognition of a commodity such as vegetables and fruits to register the sales of the recognized commodity has been proposed. The recognition accuracy of such a general object recognition technology depends on the accuracy of a feature amount registered in a dictionary. Similar to the feature amount obtained at the time of recognition, the registered feature amount mentioned herein is also extracted from an image captured by photographing a target object serving as a registration target.

Incidentally, in some cases, a target object may be photographed together with a non-target object other than the target object according to methods for photographing the target object. In this case, the feature of the non-target object other than the target object is also contained in the feature amount extracted from the image. However, if the feature amount including the feature of the non-target object is used as the reference data, there is a possibility that the recognition accuracy is degraded because the feature of the non-target object adversely affects the recognition result.

### BRIEF DESCRIPTION OF THE DRAWINGS

Fig. 1 is a perspective view illustrating an example of a checkout system according to one embodiment;
Fig. 2 is a block diagram illustrating the hardware constitution of a POS terminal and a commodity reading apparatus shown in Fig. 1;
Fig. 3 is a conceptual diagram illustrating an example of the data structure of a PLU file shown in Fig. 2;
Fig. 4 is a block diagram illustrating the functional components of the POS terminal shown in Fig. 1;
Fig. 5 is a diagram illustrating an example of a frame image acquired by an image acquisition section;
Fig. 6 is a diagram illustrating an example of the display on a commodity candidate screen;
Fig. 7 is a diagram illustrating the relation between functional sections relating to the registration in a dictionary shown in Fig. 4;
Fig. 8 is a flowchart illustrating an example of a background registration processing executed by the POS terminal according to the present embodiment;
Fig. 9 is a flowchart illustrating an example of an elimination color gamut registration processing executed by the POS terminal according to the present embodiment;
Fig. 10 is a flowchart illustrating an example of a dictionary registration processing executed by the POS terminal according to the present embodiment;
Fig. 11 is a flowchart illustrating an example of a sales registration processing executed by the POS terminal according to the present embodiment;
Fig. 12 is a perspective view illustrating the external constitution of a self-checkout POS; and
Fig. 13 is a block diagram illustrating the hardware constitution of the self-checkout POS.

### DETAILED DESCRIPTION

In accordance with an embodiment, an information processing apparatus comprises a storage module, an elimination module, an extraction module and a dictionary registration module. The storage module stores elimination information representing the feature of a non-target object, different from a prescribed target object, which is contained in an image capturing range of an image capturing module for photographing the prescribed target object. The elimination module eliminates an area specified with the elimination information stored in the storage module from an image obtained by photographing the target object with the image capturing module. The extraction module extracts a feature amount of the image from which the area is eliminated. The dictionary registration module registers the feature amount extracted by the extraction module in a dictionary as a reference data.

The storage module may store a color gamut representing the non-target object as the elimination information and the elimination module eliminates an area represented by the color gamut stored in the storage module from an image captured by photographing the target object.

The information processing apparatus may comprise a reception module configured to receive a designation on a color gamut from the image captured by the image capturing module.

The information processing apparatus may further comprise an elimination color gamut registration module configured to register the color gamut received by the reception module in the storage module as the elimination information.

A color gamut representing the non-target object may be in a complementary relation with a color gamut representing the target object.

The storage module may store a background image representing a background of the image capturing range as the elimination information and the elimination module eliminates an area corresponding to the background from an image captured by photographing the target object based on the background image stored in the storage module.

The present invention further relates to an information processing method. The method may include storing elimination information representing the feature of a non-target object, different from a prescribed target object, which is contained in an image capturing range of an image capturing module for photographing the prescribed target object, eliminating an area specified with the stored elimination information from an image obtained by photographing the target object, extracting a feature amount of the image from which the area is eliminated and registering the extracted feature amount in a dictionary as a reference data.

A color gamut representing the non-target object may be stored as the elimination information at the step of storing elimination information.

At the eliminating step, an area represented by the color gamut stored at the step of storing elimination information may be eliminated from an image captured by photographing the target object.

The information processing method may comprise receiving a designation on a color gamut from the image captured by the image capturing module.

The information processing method may further comprise registering the color gamut received at the receiving step as the elimination information.

A color gamut representing the non-target object may be in a complementary relation with a color gamut representing the target object.

A background image representing a background of the image capturing range as the elimination information may be stored at the storing step. At the eliminating step, an area corresponding to the background from an image captured by photographing the target object based on the background image stored in the storage module may be eliminated.

Hereinafter, the information processing apparatus and an information processing method according to the present embodiment are described with reference to the accompanying drawings by taking a checkout system as an example. A store system is a checkout system (POS system) equipped with a POS terminal for registering commodities and carrying out the settlement in one transaction. The present embodiment is an example of application to a checkout system introduced to a store such as a supermarket and the like.

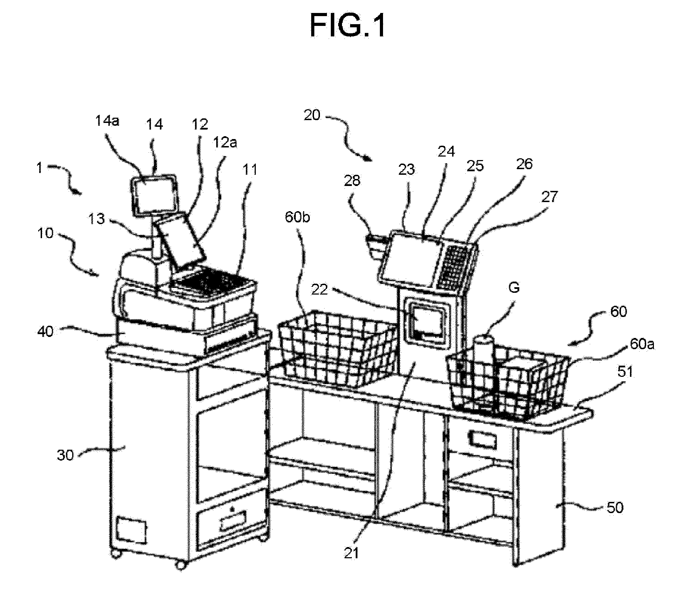

Fig. 1 is a perspective view illustrating an example of a checkout system 1. As shown in Fig. 1, the checkout system 1 includes a POS terminal 10 for registering commodities and carrying out the settlement in one transaction and a commodity reading apparatus 20 for reading information relating to a purchased commodity. Hereinafter, an example in which the POS terminal 10 is applied as the information processing apparatus according to the present embodiment is described.

The POS terminal 10 is placed on a drawer 40 on a checkout counter 30. The drawer 40 is opened or closed under the control of the POS terminal 10. The POS terminal 10 is equipped with a keyboard 11 that is operated by an operator (shop clerk), a first display device 12 and a second display device 14. The first display device 12 for displaying information to the operator is arranged at a position opposite to the operator with respect to the keyboard 11. The first display device 12 displays information on a display screen 12a thereof. A touch panel 13 is laminated on the display screen 12a. The second display device 14 is vertically arranged to be rotatable at a backside to the first display device 12. The second display device 14 displays information on a display screen 14a thereof. The second display device 14 can be rotated to adjust the display position such that the display screen 14a is directed to a customer to display information to the customer.

A counter table 50 is formed in horizontally elongated shape along a customer passage and is arranged to be in an L-shape with the checkout counter 30 on which the POS terminal 10 is placed. A commodity receiving surface 51 is formed on the counter table 50. Shopping basket 60 which stores a commodity G therein is placed on the commodity receiving surface 51. It can be understood to classify the shopping basket 60 on the counter table 50 into a first shopping basket 60a brought to the counter table 50 by a customer and a second shopping basket 60b placed facing the first shopping basket 60a across the commodity reading apparatus 20. The shopping basket 60, which is not limited to a so-called basket shape, may be a tray and the like. Further, the shopping basket 60 (second shopping basket 60b), which is not limited to a so-called basket shape, may be a box, a bag and the like.

The commodity reading apparatus 20, which is connected with the POS terminal 10 to be capable of sending and receiving data, is arranged on the commodity receiving surface 51 of the counter table 50. The commodity reading apparatus 20 comprises a thin rectangular housing 21. A reading window 22 is arranged at the front side of the housing 21. A display and operation section 23 is installed on the upper portion of the housing 21. A first display device 25 serving as a display section on the surface of which a touch panel 24 is laminated is arranged on the display and operation section 23. A keyboard 26 is arranged at the right side of the first display device 25. A card reading slot 27 of a card reader (not shown) is arranged at the right side of the keyboard 26. A second display device 28 for providing information for a customer is arranged at the left side of the display and operation section 23.

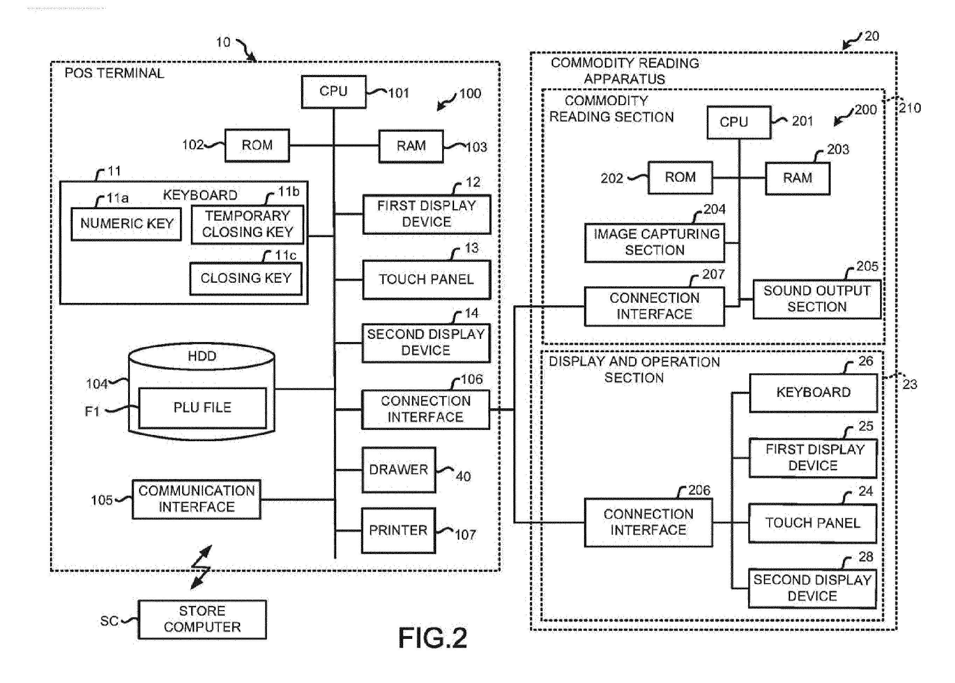

Such a commodity reading apparatus 20 includes a commodity reading section 210 (refer to Fig. 2). The commodity reading section 210 includes an image capturing section 204 (refer to Fig. 2) arranged at the rear side of the reading window 22.

Commodities G purchased in one transaction are put in the first shopping basket 60a taken to the counter table 50 by a customer. The commodities G in the first shopping basket 60a are moved one by one to the second shopping basket 60b by the operator who operates the commodity reading apparatus 20. During the movement, the commodity G is directed to the reading window 22 of the commodity reading apparatus 20. At this time, the image capturing section 204 (refer to Fig. 2) arranged inside the reading window 22 captures an image of the commodity G through the reading window 22.

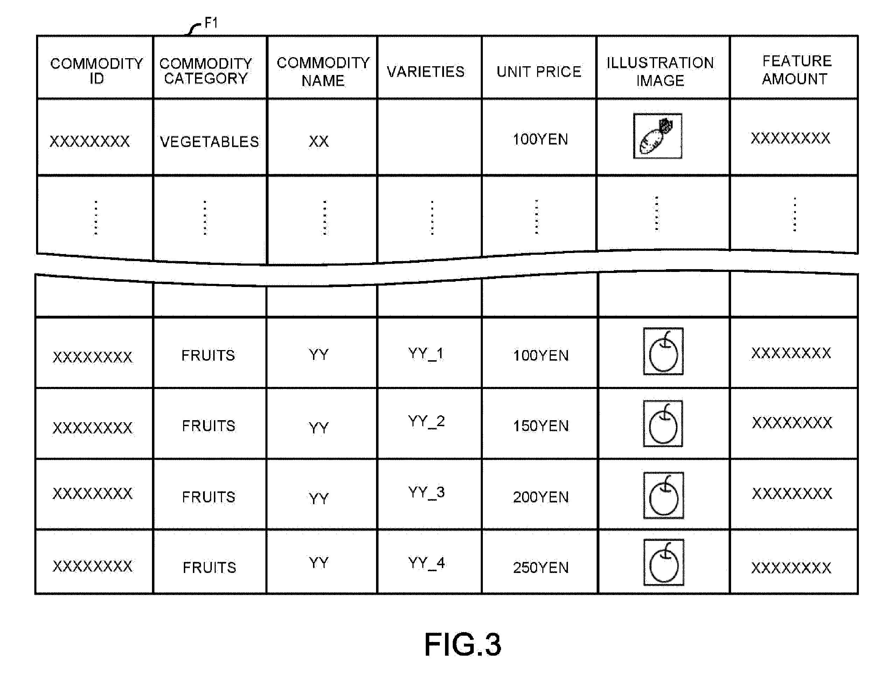

In the commodity reading apparatus 20, a screen for designating a commodity (image), registered in a later-described PLU file F1 (refer to Fig. 3), which corresponds to the commodity G contained in the image captured by the image capturing section 204, is displayed on the display and operation section 23, and a commodity ID of the designated commodity is notified to the POS terminal 10. In the POS terminal 10, information relating to the sales registration of the commodity such as a commodity category, commodity name, unit price and the like of the commodity specified with the commodity ID is recorded in a sales master file (not shown) based on the commodity ID notified from the commodity reading apparatus 20 to carry out sales registration.

Fig. 2 is a block diagram illustrating the hardware constitutions of the POS terminal 10 and the commodity reading apparatus 20. The POS terminal 10 includes a microcomputer 100 serving as an information processing section which executes an information processing. The microcomputer 100 is constituted by connecting through a bus line a ROM (Read Only Memory) 102 and a RAM (Random Access Memory) 103 with a CPU (Central Processing Unit) 101 which executes various kinds of arithmetic processing to control each section of the POS terminal 10.

The keyboard 11, the first display device 12, the touch panel 13, the second display device 14 and the drawer 40 are all connected with the CPU 101 of the POS terminal 10 via various input/output circuits (none is shown). These sections are controlled by the CPU 101.

The keyboard 11 includes numeric keys 11 a on which numeric characters and arithmetic operators are displayed, a temporary closing key 11 b and a closing key 11 c.

An HDD (Hard Disk Drive) 104 is connected with the CPU 101 of the POS terminal 10. The HDD 104 generally stores an OS, application programs and various files. When the POS terminal 10 is activated, the programs and the various files stored in the HDD 104 are all or partially developed or expanded on the RAM 103 to be executed by the CPU 101. The programs stored in the HDD 104 include, for example, a program for a later-described dictionary registration processing and a program for a later-described sales registration processing. The files stored in the HDD 104 include, for example, a PLU file F1.

The PLU file F1 is a commodity file in which information relating to the sales registration of the commodity G is stored for each of the commodities G displayed and sold in the store. In the following description, the PLU file F1 is used as a dictionary, however, the dictionary may be a file different from the PLU file F1. The dictionary stores the reference data (feature amount) of the commodity extracted from the image data obtained from a captured image. In a case in which the dictionary is a file different from the PLU file F1, the reference data (feature amount) stored in the dictionary is associated with information (recognition information) stored in the PLU file F1. The feature amount is obtained by parameterizing the appearance feature such as the standard shape, surface tint, pattern, concave-convex state and the like of the commodity.

Fig. 3 is a conceptual diagram illustrating an example of the data arrangement of the PLU file F1. As shown in Fig. 3, the PLU file F1 stores commodity information of each commodity. The commodity information includes information relating to a commodity such as a commodity ID serving as recognition information uniquely assigned to each commodity G, a commodity category the commodity G belongs to, a commodity name, a unit price and the like, an illustration image indicating the commodity G, and the feature amount indicating the appearance feature of the commodity G. The feature amount is the reference data used in the later-described similarity degree determination. The PLU file F1 can be read by the commodity reading apparatus 20 through a later-described connection interface 106.

Further, in a case in which it is necessary to recognize (detect) not only a category of object (commodity) but also a variety, the PLU file F1 manages information relating to a commodity such as a commodity name, a unit price and the like, an illustration image indicating the commodity and the feature amount for each variety as shown in Fig. 3. For example, in a case in which the category of object (commodity) is "YY", information relating to the commodity, an illustration image indicating the commodity and the feature amount are managed for each variety such as a "YY_1", "YY_2" and "YY_3". Further, in a case of displaying a candidate by using characters but not an illustration image, the illustration image may be not stored in the PLU file F1.

Further, the HDD 104 is used as a background storage section 1041 and an elimination color gamut storage section 1042 which are described later.

Return to Fig. 2. A communication interface 105 for executing data communication with a store computer SC is connected with the CPU 101 of the POS terminal 10 through an input/output circuit (not shown). The store computer SC is arranged at a back office in a store. The HDD (not shown) of the store computer SC stores the PLU file F1 to be delivered to the POS terminal 10.

A connection interface 106 which enables the data transmission/reception with the commodity reading apparatus 20 is connected with the CPU 101 of the POS terminal 10. The commodity reading apparatus 20 is connected with the connection interface 106. A receipt printer 107 which carries out printing on a receipt is connected with the CPU 101 of the POS terminal 10. The POS terminal 10 prints content of one transaction on a receipt through the printer 107 under the control of the CPU 101.

The commodity reading section 20 also includes a microcomputer 200. The microcomputer 200 is constituted by connecting a ROM 202 and a RAM 203 with a CPU 201 through a bus line. The ROM 202 stores programs executed by the CPU 201. The image capturing section 204 and a sound output section 205 are connected with the CPU 201 through various input/output circuits (none is shown). The operations of the image capturing section 204 and the sound output section 205 are controlled by the CPU 201.

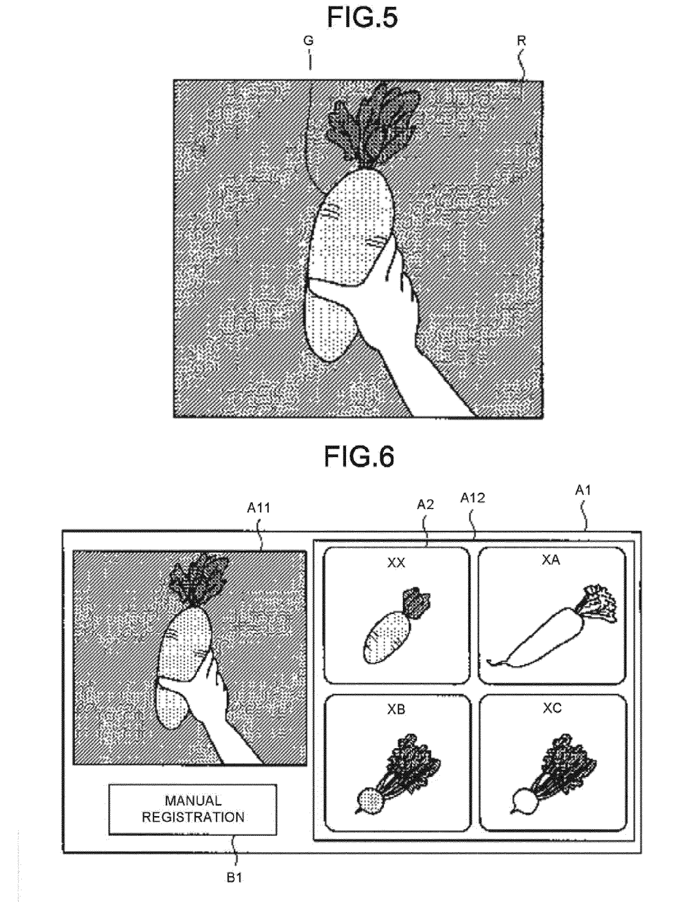

The display and operation section 23 is connected with the commodity reading section 210 and the POS terminal 10 through a connection interface 206. The operation of the display and operation section 23 is controlled by the CPU 201 of the commodity reading section 210 and the CPU 101 of the POS terminal 10. The first display device 25 displays various kinds of screens such as a later-described commodity candidate screen (refer to Fig. 6) under the control of the CPU 101 and the CPU 201. The first display device 25 further displays a job selection screen (not shown) for instructing selection of various jobs. The job selection screen includes a selection menu for instructing execution of each later-described processing such as a background registration, elimination color gamut registration, feature amount registration, sales registration and the like.

The image capturing section 204, which includes a color CCD image sensor or a color CMOS image sensor and the like, is an image capturing device for carrying out an image capturing processing through the reading window 22 under the control of the CPU 201. For example, the image capturing section 204 captures images at 30fps. The frame images (captured images) sequentially captured by the image capturing section 204 at a predetermined frame rate are stored in the RAM 203.

The sound output section 205 includes a sound circuit and a speaker and the like for issuing a preset alarm sound and the like. The sound output section 205 gives a notification with a sound (voice) or an alarm sound under the control of the CPU 201.

Further, a connection interface 207 which is connected with the connection interface 106 of the POS terminal 10 to enable the data transmission/reception with the POS terminal 10 is connected with the CPU 201. The CPU 201 carries out data transmission/reception with the display and operation section 23 through the connection interface 207.

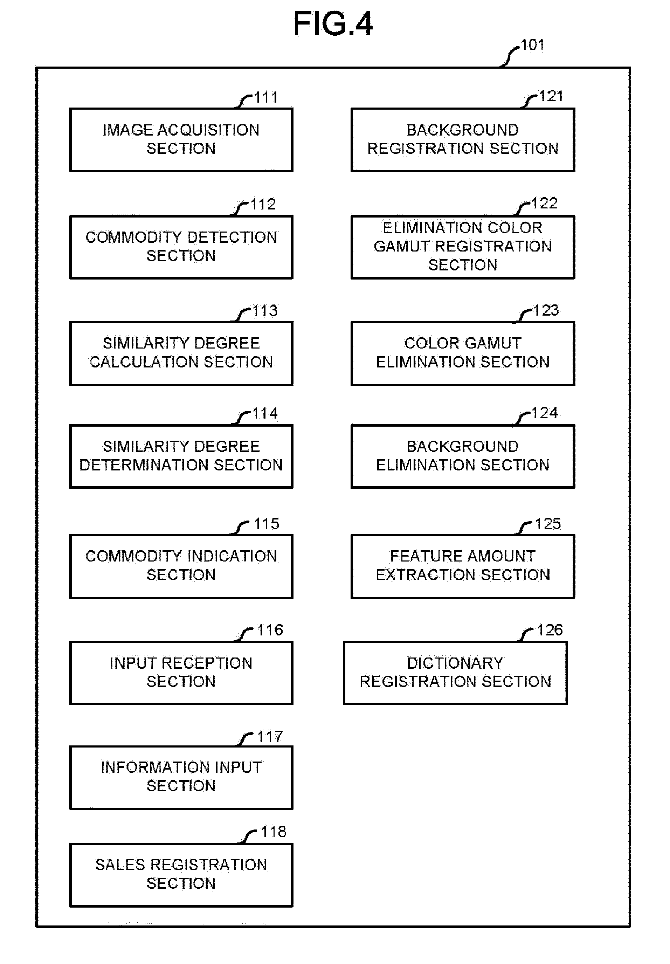

Next, the functional components of the POS terminal 10 realized by executing programs by the CPU 101 are described with reference to Fig. 4.

Fig. 4 is a block diagram illustrating the functional components of the POS terminal 10. The CPU 101 of the POS terminal 10 executes the programs stored in the HDD 104 to realize each functional section as shown in Fig. 4. Hereinafter, each functional section is described.

First, functional sections relating to commodity sales registration including an image acquisition section 111, a commodity detection section 112, a similarity degree calculation section 113, a similarity degree determination section 114, a commodity indication section 115, an input reception section 116, an information input section 117, and a sales registration section 118 are described.

The image acquisition section 111 outputs an ON-signal of image capturing to the image capturing section 204 to enable the image capturing section 204 to start an image capturing operation. The image acquisition section 111 sequentially acquires the frame images which are captured by the image capturing section 204 after the image capturing operation is started and are stored in the RAM 203. The image acquisition section 111 acquires the frame images from the RAM 203 in the order the same as that of storing them to the RAM 203.

Fig. 5 is a diagram illustrating an example of a frame image acquired by the image acquisition section 111.

As shown in Fig. 5, if the operator holds the commodity G over the reading window 22, the whole or part of the commodity G that has entered the image capturing range R of the image capturing section 204 is photographed by the image capturing section 204. The image acquisition section 111 acquires the frame images captured by the image capturing section 204 sequentially.

The commodity detection section 112 detects the whole or part of the commodity G contained in the frame image acquired by the image acquisition section 111 through a pattern matching technology. Specifically, the commodity detection section 112 extracts a contour line from the binary image of the acquired frame image. Next, the contour line extracted from the former frame image is compared with the contour line extracted from the current frame image to detect the commodity which is held over the reading window 22 for the sales registration.

As another method for detecting a commodity, it is detected whether or not there is a flesh color area in the acquired frame image. If the flesh color area is detected, in other words, if the hand of a shop clerk is detected, the aforementioned detection of the contour line nearby the flesh color area is carried out to try to extract the contour line of the commodity that is assumed to be held by the shop clerk. At this time, if a contour line representing the shape of a hand and the contour line of another object nearby the contour line of the hand are detected, the commodity detection section 112 detects the commodity from the contour line of the target object.

Further, the commodity detection section 112 extracts the surface state such as the tint, the surface concave-convex state and the like of the commodity G from the whole or part of the image of the detected commodity G photographed by the image capturing section 204 as the feature amount. In addition, to shorten the processing time, the commodity detection section 112 does not take the contour or the size of the commodity G into consideration.

The similarity degree calculation section 113 respectively compares the feature amount of each commodity (hereinafter referred to as a "registered commodity") registered in the PLU file F1 with the feature amount of the commodity G to calculate a similarity degree between the commodity G and the registered commodity. Herein, in a case in which a commodity image of the registered commodity is set to "similarity degree: 1.0"=100%, the similarity degree indicates how similar the whole or part of the image of the commodity G is to the registered commodity image. For example, in the tint and the surface concave-convex state, the weighting is changed therebetween to calculate the similarity degree.

The recognition of a target object contained in an image as stated above is referred to as general object recognition. As to the general object recognition, various recognition technologies are described in the following document.

Keiji Yanai "Present situation and future of generic object recognition", Journal of Information Processing Society, Vol. 48, No. SIG16 [Search on Heisei 24 May 19th], Internet < URL: http://mm.cs.uec.ac.jp/IPSJ-TCVIM-Yanai.pdf>

In addition, the technology carrying out the general object recognition by performing an area-division on the image for each object is described in the following document.

Jamie Shotton etc, "Semantic Texton Forests for Image Categorization and Segmentation", [Search on Heisei 24 May 19th], Internet <URL: http://cite seerx.ist.psu.edu/viewdoc/download?doi=1 0.1.1.145.3036&rep=rep1&type=pdf>

It is noted that no limitation is given to the method for calculating the similarity degree between the image of the photographed commodity G and the registered commodity. For example, the similarity degree between the image of the photographed commodity G and each registered commodity can be calculated as an absolute evaluation or a relative evaluation.

If the similarity degree is calculated as an absolute evaluation, the image of the photographed commodity G and each registered commodity are compared one by one, and the similarity degree obtained from the comparison result can be adopted as it is. In a case in which the similarity degree is calculated as a relative evaluation, the similarity degree may be obtained as long as the sum of the similarity degrees between the photographed commodity G and each registered commodity becomes 1.0 (100%).

Further, the similarity degree may be a value (similarity degree) obtained by comparing the feature amount of the commodity G and the reference feature amount of the commodity registered in the PLU file F1 and indicates how similar between the two feature amounts. The concept of the similarity degree is not limited to this example, and may be a value indicating the correspondence degree of the feature amount of each registered commodity in the PLU file F1, or a value indicating how relative the feature amount of the commodity G to the feature amount of each registered commodity in the PLU file F1.

The similarity degree determination section 114 recognizes a registered commodity (commodity ID) of which the similarity degree among the calculated similarity degrees is above a given threshold value as a candidate (commodity candidate) of the commodity G photographed by the image capturing section 204. Herein, in a case in which there exists a registered commodity of which the similarity degree is extremely higher than other similarity degrees among the registered commodities each of which has a similarity degree higher than the threshold value, the registered commodity may be automatically determined as a determination commodity. Further, it is assumed that the comparison standard of the similarity degree may be randomly set.

The commodity indication section 115 enables the first display device 25 to display information relating to the registered commodity recognized as a commodity candidate by the similarity degree determination section 114. More specifically, the commodity indication section 115 reads a record of the registered commodity recognized as the commodity candidate from the PLU file F1 to display it in a commodity candidate screen of the first display device 25.

Fig. 6 is a diagram illustrating an example of display of the commodity candidate screen. As shown in Fig. 6, a commodity candidate screen A1 displayed on the first display device 25 includes a captured image area A11 and a commodity candidate area A12.

The captured image area A11 displays a captured image acquired by the image acquisition section 111. A manual registration button B1 for manually recognizing (registering) the commodity G according to a department code or a commodity list is arranged below the captured image area A11. The CPU 201 displays, in response to the operation on the manual registration button B1, a manual registration screen (not shown) for manually carrying out the recognition (registration) of the commodity G on the first display device 25. In addition, the commodity designated through the manual registration screen is processed as the determination commodity.

The commodity candidate area A12 displays information relating to the registered commodity recognized as the commodity candidate. A display area A2 is arranged in the commodity candidate area A12. In Fig. 6, an example in which four display areas A2 are set in the commodity candidate area A12 is illustrated, however, the number of the display areas A2 is not limited. The commodity indication section 115 displays commodity information (XX, XA and the like) such as the commodity image, commodity name and the like of the commodity candidate in the display area A2. Further, one from the commodity candidates displayed in the commodity candidate area A12 may be selected through the touch panel 24. With the constitution as stated above, the operator of the commodity reading apparatus 20 can select one commodity candidate corresponding to the commodity G as the determination commodity from the commodity candidates displayed in the commodity candidate area A12.

The input reception section 116 receives various input operations on the display of the first display device 25 through the touch panel 24 or the keyboard 26. For example, the input reception section 116 receives, in response to a selection operation for the commodity candidates, input of the determination commodity corresponding to the commodity G from the displayed commodity candidates.

The information input section 117 inputs information corresponding to content of the operation received by the input reception section 116 to the self-device through the connection interface 207. For example, the information input section 117 inputs information (for example, a commodity ID, a commodity name and the like) relating to the determination commodity determined as stated above. Further, the information input section 117 may input, through the touch panel 24 or the keyboard 26, a sales volume separately inputted together with the commodity ID and the like.

The sales registration section 118 carries out a sales registration of the corresponding commodity based on a commodity ID and a sales volume inputted from the information input section 117. More specifically, the sales registration section 118 records a notified commodity ID, and a commodity category, a commodity name, a unit price and the like corresponding to the notified commodity ID together with the sales volume in the sales master file to carry out the sales registration.

Next, the functional components of a dictionary registration are described.

As stated above, the POS terminal 10 adopts a general object recognition technology in which the variety of a target object is recognized according to a similarity degree between the feature amount of the commodity G extracted from the image data captured by the image capturing section 204 and the feature amount registered in a dictionary. The recognition accuracy of such a general object recognition technology depends on the accuracy of the feature amount registered in the dictionary. Similar to the extraction of the feature amount at the time of recognition, the feature amount mentioned herein is to be extracted from an image captured by photographing a target object serving as the registration target.

Incidentally, in some cases, there is a possibility that a non-target object may be captured together with a target object according to methods for photographing the target object. For example, in a case of photographing the target object while the target object is held by a hand, not only the target object but also the hand are photographed. In addition, the target object and the background thereof are photographed. In this case, the feature of the non-target object (hand or background) other than the feature of the target object is also contained in the feature amount extracted from the image. However, if the feature amount including the feature of the non-target object is used as the reference data, there is a possibility that the recognition accuracy is degraded because the feature of the non-target object adversely affects the recognition.

Thus, the POS terminal 10 comprises a functional component that can remove a non-target object contained in an image in relation to the registration of the feature amount in the PLU file F1. Specifically, as shown in Fig. 4, the CPU 101 of the POS terminal 10 comprises, by executing programs stored in the HDD 104, a background registration section 121, an elimination color gamut registration section 122, a color gamut elimination section 123, a background elimination section 124, a feature amount extraction section 125 and a dictionary registration section 126 as functional sections relating to a dictionary registration.

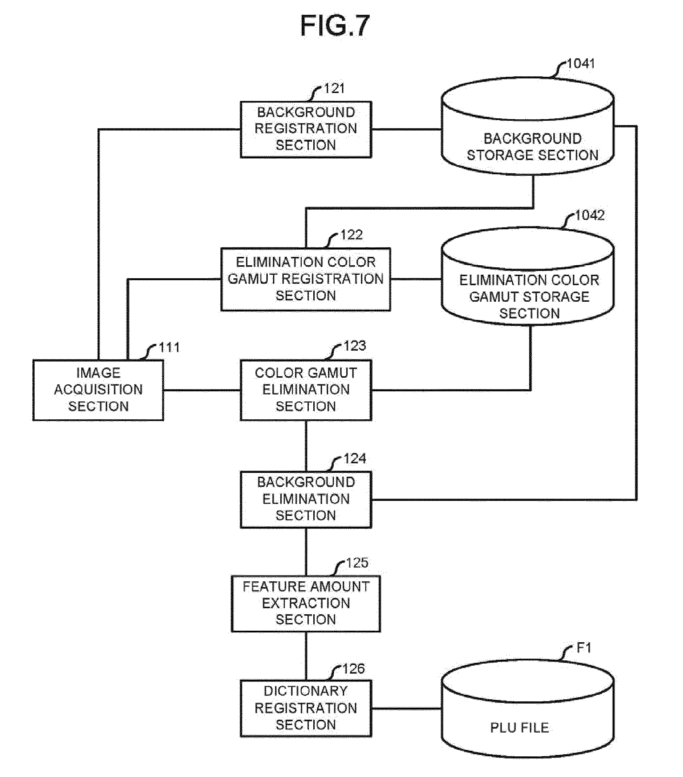

Fig. 7 is a diagram illustrating the relation between functional sections relating to a dictionary registration shown in Fig. 4. Further, the image acquisition section 111 is the same as the functional section relating to sales registration described above, and therefore the detailed description thereof is not provided.

Further, it is assumed that the operations through the touch panel 24 or the keyboard 26 are carried out using the functions of the input reception section 116 and the information input section 117 (neither is shown) described above.

The background registration section 121 registers a background at the time of photographing a target object, that is, a background image indicating the background in the image capturing range R of the image capturing section 204 in the background storage section 1041 as an elimination information. The background image may be images acquired by the image acquisition section 111. Specifically, an image of the image capturing range R captured in a state in which the target object isn't held over the reading window 22 is used as the background image.

The elimination color gamut registration section 122 registers a color gamut (elimination color gamut) serving as an eliminating object in the elimination color gamut storage section 1042 as an elimination information. As to the elimination color gamut, for example, a surface color of a hand (glove) holding a target object, a surface color of a brace for supporting a target object and the like can be listed. Further, in a case of holding the target object by hand, it is preferable to wear gloves of the color gamut in a complementary relation with the target object. In this way, it is easy to distinguish the target object from the non-target object (glove).

Further, it is noted that no limitation is given to the designating method of the elimination color gamut. For example, the elimination color gamut is designated according to a color chart or a color space, and is also designated through an input of an RGB values and the like. Further, it may also be designated by designating an area indicating a non-target object such as a hand from an image acquired by the image acquisition section 111 to designate a color gamut of pixels contained in the area as the elimination color gamut. In a case of using an image acquired by the image acquisition section 111, an elimination color gamut may be designated from an image of which the background is eliminated by the later-described background elimination section 124. When an elimination color gamut designated through the display and operation section 23 is received, the elimination color gamut registration section 122 registers the elimination color gamut in the elimination color gamut storage section 1042.

The color gamut elimination section 123 eliminates an area indicated by the elimination color gamut stored in the elimination color gamut storage section 1042 from the image acquired by the image acquisition section 111. Specifically, by executing a well-known chroma key processing and the like, a pixel part having color information corresponding to the elimination color gamut is eliminated from the pixels of the image acquired by the image acquisition section 111. The pixel part serving as an eliminating object may be one pixel unit, or may be a part constituted by more than a given number of pixels (for example, 10 pixels). Further, the "elimination" in the present embodiment means to set such that a corresponding area (eliminating object) is replaced with a predetermined color (for example, black) to eliminate this area from an extraction target of feature amounts in the later-described feature amount extraction section 125.

The background elimination section 124 uses the background image registered in the background storage section 1041 to eliminate an area (background part) corresponding to the background from the image acquired by the image acquisition section 111. It is noted that no limitation is given to the elimination method of the background part. As one example, the exclusive logic sum of the pixel values is calculated for each pixel of the background image registered in the background storage section 1041 corresponding to each pixel of the image acquired by the image acquisition section 111. Then, a pixel part having a same value (or substantially same value) as the pixel value of the background image is eliminated from the image acquired by the image acquisition section 111. In this way, the background part can be eliminated from the image.

Further, it is exemplified in the present embodiment that the background part of the image of which the elimination color gamut is eliminated by the color gamut elimination section 123 is eliminated. However, the present invention is not limited to this, and the elimination of the background part may be carried out prior to eliminating the elimination color gamut.

The feature amount extraction section 125 is a functional section for extracting the feature amount from the image of which the elimination color gamut and the background part are eliminated. Specifically, the feature amount extraction section 125 extracts a value obtained by parameterizing the appearance feature such as the shape, surface tint, pattern, concave-convex state and the like indicated in the image as a feature amount. Further, the feature amount extraction section 125 eliminates an area (image part) in the image that is set to be eliminated in the color gamut elimination section 123 and the background elimination section 124 from the extraction target of the feature amount. Thus, the feature amount extracted by the feature amount extraction section 125 represents the appearance feature of the target object.

The dictionary registration section 126 registers the feature amount extracted by the feature amount extraction section 125 together with a commodity information such as the commodity ID, commodity category, commodity name, unit price and the like in the PLU file F1 serving as a dictionary. The feature amount registered in the PLU file F1 is used as the reference data for referring to the feature amount of the commodity G, as stated above. Further, it is exemplified in the present embodiment that the feature amount and other information such as the commodity ID, commodity category, commodity name, unit price and the like are registered at the same time. However, the above other information may be registered at a different timing.

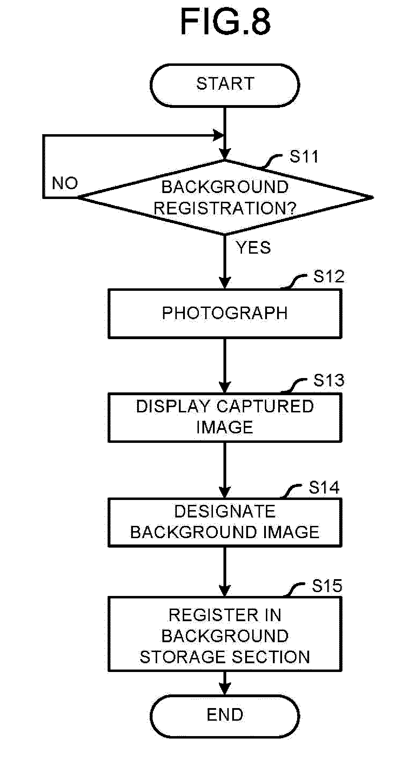

Hereinafter, the operations of the checkout system 1 are described. First, a background registration processing relating to a dictionary registration of commodity is described with reference to Fig. 8. Fig. 8 is a flowchart illustrating an example of a background registration processing executed by the POS terminal 10.

The CPU 101 of the POS terminal 10 waits for until a "background registration" is selected from a menu of a job selection screen (not shown) displayed on the first display device 25 (NO in ACT S11). If the "background registration" is selected (YES in ACT S11), the image acquisition section 111 outputs an ON-signal of image capturing to the image capturing section 204 to enable the image capturing section 204 to start an image capturing operation (ACT S12). Next, the CPU 101 displays an image acquired by the image acquisition section 111 on the first display device 25 (ACT S13).

The number of images to be displayed on the first display device 25 may be one, or more than one. For example, a plurality of images acquired by the image acquisition section 111 are displayed side by side. The operator designates a background image from the image displayed on the first display device 25 through the touch panel 24.

If receiving the designation of the background image (ACT S14), the background registration section 121 registers the background image in the background storage section 1041 (ACT S15), and then terminates the present processing.

Further, it is exemplified in the present processing that the image captured by the image capturing section 204 is used in real time; however, it is not limited to this. For example, the images captured by the image capturing section 204 are pre-stored in the HDD 104 and the like, and the background image is designated from these images.

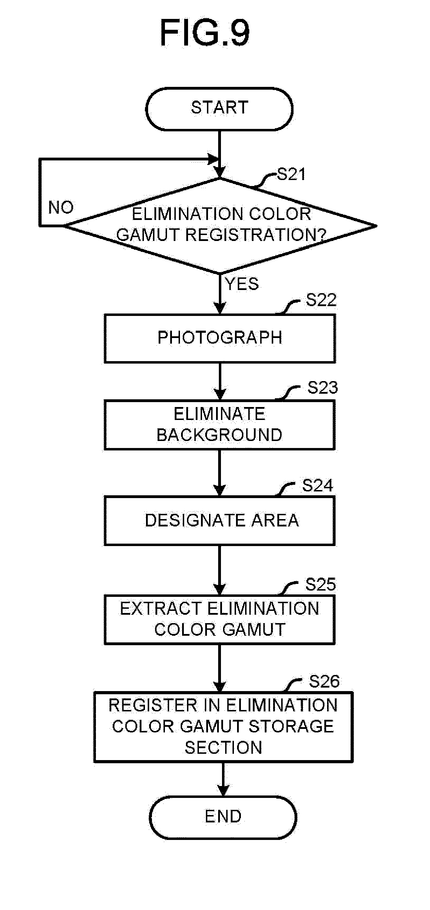

Next, an elimination color gamut registration processing relating to a dictionary registration of commodity is described with reference to Fig. 9. Herein, Fig. 9 is a flowchart illustrating an example of an elimination color gamut registration processing executed by the POS terminal 10. Further, a method for designating an elimination color gamut by using the images captured by the image capturing section 204 is described in the present processing.

The CPU 101 of the POS terminal 10 waits for until an "elimination color gamut registration" is selected from a menu of a job selection screen (not shown) displayed on the first display device 25 (NO in ACT S21). If the "elimination color gamut registration" is selected (YES in ACT S21), the image acquisition section 111 outputs an ON-signal of image capturing to the image capturing section 204 to enable the image capturing section 204 to start an image capturing operation (ACT S22).

The operator of the commodity reading apparatus 20 places a glove for holding the commodity G or a brace for supporting the commodity G in the image capturing range of the image capturing section 204 to enable the image capturing section 204 to photograph it. Further, it is assumed that a given color (color gamut) is applied to the glove or the brace.

Next, the background elimination section 124 uses the background image stored in the background storage section 1041 to eliminate a background part from the image acquired by the image acquisition section 111 (ACT S23). Sequentially, the CPU 101 displays the image of which the background part is eliminated in the processing in ACT S23 on the first display device 25.

The operator of the POS terminal 10 designates a part (area) where the glove or brace is presented from the image displayed on the first display device 25 through the touch panel 13(ACT S24). Further, it is preferable that the background part eliminated in the processing in ACT S23 from the image displayed on the first display device 25 is displayed in a state in which the designation of the elimination color gamut is impossible. For example, the background part eliminated in the processing in ACT S23 is not displayed, or displayed by replacing it with other image (for example, a white background).

If an area in the image is designated, the elimination color gamut registration section 122 extracts a color gamut represented by each pixel in the area as an elimination color gamut (ACT S25). Then, the elimination color gamut registration section 122 registers the elimination color gamut in the elimination color gamut storage section 1042 (ACT S26), and then terminates the present processing.

Further, it is exemplified in the present processing that the elimination color gamut is designated by using the image captured by the image capturing section 204; however, it is not limited to this, and the elimination color gamut may be designated according to a color chart or a color space. Further, in the present processing, the images captured by the image capturing section 204 are used in real time; however, it is not limited to this. For example, the images captured by the image capturing section 204 are stored beforehand in the HDD 104 and the like, and the elimination color gamut is designated by using these images. In addition, in the present processing, the elimination color gamut is designated using the image of which the background part is eliminated; however, it is not limited to this. The elimination color gamut may be designated by directly using an image captured by the image capturing section 204.

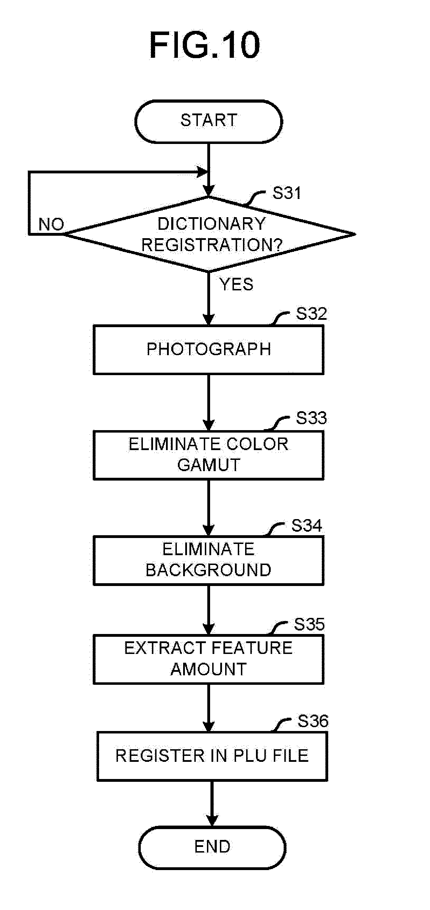

Next, a dictionary registration processing relating to a dictionary registration is described with reference to Fig. 10. Herein, Fig. 10 is a flowchart illustrating an example of a dictionary registration processing executed by the POS terminal 10.

The CPU 101 of the POS terminal 10 waits for until a "dictionary registration" is selected from a menu of a job selection screen (not shown) displayed on the first display device 25 (NO in ACT S31). If the "dictionary registration" is selected (YES in ACT S31), the image acquisition section 111 outputs an ON-signal of image capturing to the image capturing section 204 to enable the image capturing section 204 to start an image capturing operation (ACT S32).

The operator of the commodity reading apparatus 20 holds or supports the commodity G using the glove or brace which is used at the time of registration of the elimination color gamut and directs the commodity G to the image capturing section 204 to carry out image capturing operation of the commodity G.

If the image acquisition section 111 acquires an image, the color gamut elimination section 123 eliminates a color gamut (elimination color gamut) registered in the elimination color gamut storage section 1042 from the image (ACT S33). Then, the background elimination section 124 uses the background image registered in the background storage section 1041 to eliminate a background part from the image generated in the processing in ACT S33 (ACT 34). Sequentially, the feature amount extraction section 125 extracts a feature amount from the image generated in the processing in ACT S34 (ACT S35).

Then, the dictionary registration section 126 registers the feature amount extracted in the processing in ACT S35 in the PLU file F1 together with information of the corresponding commodity (ACT S36), and then terminates the present processing.

Further, in the present processing, the feature amount is extracted automatically using the image captured by the image capturing section; however, it is not limited to this. For example, the images captured by the image capturing section 204 are displayed on the first display device 12 such that the image to be used is selected by the operator. In addition, it is exemplified in the present processing that the image captured by the image capturing section 204 is used in real time; however, it is not limited to this. For example, the images captured by the image capturing section 204 are pre-stored in the HDD 104 and the like, and the image to be used is designated from these stored images.

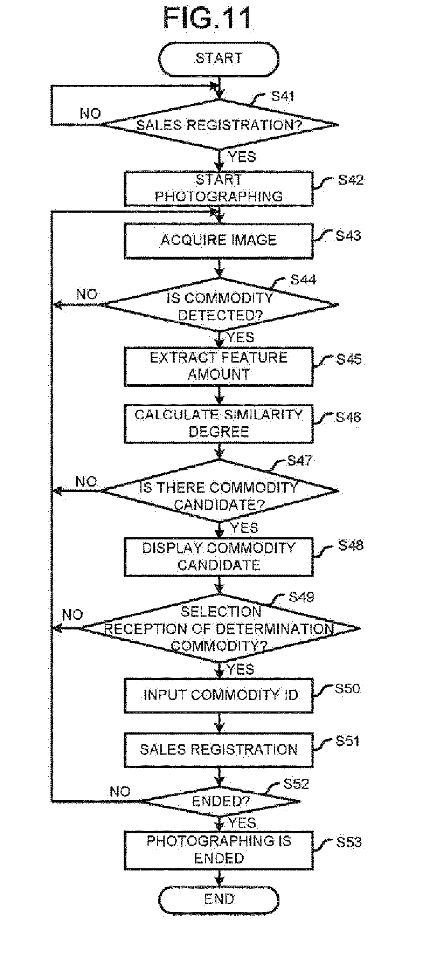

Next, a sales registration processing relating to a sales registration of commodity is described with reference to Fig. 11. Fig. 11 is a flowchart illustrating an example of a sales registration processing executed by the POS terminal 10.

The CPU 101 of the POS terminal 10 waits for until a "sales registration" is selected from a menu of a job selection screen (not shown) displayed on the first display device 25 (NO in ACT S41). If the "sales registration" is selected (YES in ACT S41), the image acquisition section 111 outputs an ON-signal of image capturing to the image capturing section 204 to enable the image capturing section 204 to start an image capturing operation (ACT S42). Meanwhile, the image acquisition section 111 acquires an image that is captured by the image capturing section 204 and is stored in the RAM 203 (ACT S43).

Next, the commodity detection section 112 carries out the detection of whole or part of the commodity G from the image acquired in the processing in ACT S43 (ACT S44). In ACT S44, if the commodity G isn't detected (NO in ACT S44), the processing in ACT S43 is executed again. If the commodity G is detected (YES in ACT S44), the similarity degree determination section 114 extracts a feature amount of the commodity G detected in the processing in ACT S44 from the captured image acquired in the processing in ACT S43 (ACT S45).

Next, the similarity degree determination section 114 compares the feature amount extracted in the processing in ACT S45 with the feature amount of each commodity registered in the PLU file F1 to calculate the similarity degree respectively (ACT S46). The similarity degree determination section 114 determines whether or not there is a registered commodity of which the value of similarity degree within the calculated similarity degrees is greater than a predetermined threshold value (ACT S47). If there isn't a registered commodity of which the value of the similarity degree is greater than the threshold value (NO in ACT S47), the processing in ACT S43 is executed again. If there is a registered commodity of which the value of the similarity degree is greater than the threshold value (YES in ACT S47), the similarity degree determination section 114 recognizes the registered commodity (commodity ID) as a commodity candidate.

The commodity indication section 115 displays the commodity candidate recognized in the processing in ACT S47 on the first display device 25 (ACT S48). Next, the input reception section 116 determines whether or not a selection of determination commodity is received through the touch panel 24 or the keyboard 26 (ACT S49). If a selection operation of determination commodity isn't received (NO in ACT S49), the processing in ACT S43 is executed again.

If the selection operation of determination commodity is received in ACT S49 (YES in ACT S49), the information input section 117 inputs information of the commodity such as the commodity ID to the POS terminal 10 (ACT S50), and the processing in ACT S51 is to be executed. If the sales volume is inputted separately through the touch panel 24 or the keyboard 26, it is assumed that the sales volume and information indicating the determination commodity are output to the POS terminal 10 in ACT S50. Further, if the input of sales volume isn't carried out, the sales volume "1" may be output as a default value.

Next, the sales registration section 118 reads, based on the commodity ID and the sales volume input in ACT S50, the commodity information such as the commodity category, the unit price and the like from the PLU file F1 to register it in the sales master file (ACT S51).

Next, the CPU 101 determines whether or not a job such as a sales registration is ended according to the operation instruction on the keyboard 11 (ACT S52). In a case of continuing the job (NO in ACT S52), the CPU 101 returns to carry out the processing in ACT S43 and continues the processing. In a case of ending the job (YES in ACT S52), the image acquisition section 111 outputs an OFF-signal of image capturing to the image capturing section 204 to end the image capturing operation carried out by the image capturing section 204 (ACT S53), and then terminates the present processing.

As stated above, in accordance with the checkout system 1 of the present embodiment, after a non-target object is eliminated from an image captured by the image capturing section 204, a feature amount is extracted from the image. In this way, as the feature amount of a target object can properly be extracted from the image, a reference data for the target object can be generated accurately. Further, in accordance with the checkout system 1 of the present embodiment, a feature amount to be extracted from an image in which a non-target object is eliminated is registered in the PLU file F1 (dictionary) as a reference data. As a result, the influence of the non-target object can be suppressed, thus improving the recognition accuracy of the commodity G.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

For example, it is exemplified in the embodiment described above that the PLU file F1 is arranged in the POS terminal 10; however, the present invention is not limited to this. The PLU file F1 may be arranged in the commodity reading apparatus 20, or arranged in an external device which can be accessed by the POS terminal 10 and the commodity reading apparatus 20.

Further, it is exemplified in the embodiment described above that both the background part and the elimination color gamut are eliminated from the image; however, the present invention is not limited to this, and it may eliminate either one of the background part and the elimination color gamut. Further, in the embodiment described above, the elimination of the background part and the elimination color gamut is carried out at the time of the dictionary registration; however, the present invention is not limited to this, and it may be carried out at the time of the sales registration processing. Specifically, for an image captured by photographing the commodity G to be recognized, the feature amount of the image is extracted after the elimination of the background part and the elimination color gamut is carried out.

Further, it is exemplified in the embodiment described above that the background image and the color gamut are registered as the elimination information representing the feature of the non-target object. However, it is noted that the elimination information is not limited to this. For example, other feature such as the shape and the like of the non-target object is registered as the elimination information. In this case, it is assumed that the information processing apparatus further comprises an elimination module that can eliminate an area corresponding to the shape of the non-target object from the image.

Further, in the embodiment stated above, the present invention is applied to the POS terminal 10 serving as an information processing apparatus having functions of the background registration section 121, the elimination color gamut registration section 122, the color gamut elimination section 123, the background elimination section 124, the feature amount extraction section 125 and the dictionary registration section 126; however, it is not limited to this. For example, it may also be applied to the commodity reading apparatus 20 serving as an information processing apparatus which has functions of the background registration section 121, the elimination color gamut registration section 122, the color gamut elimination section 123, the background elimination section 124, the feature amount extraction section 125 and the dictionary registration section 126 to output the feature amount of a registration object to the POS terminal 10. Further, in the embodiment stated above, the reference data is set to the feature amount; however, the image itself in which the background part and the elimination color gamut are eliminated may be registered in a dictionary as the reference data.

Further, in the embodiment stated above, the present invention is applied to the checkout system 1 serving as a store system consisting of the POS terminal 10 and the commodity reading apparatus 20; however, it is not limited to this, and it may also be applied to a single apparatus comprising all the functions of the POS terminal 10 and the commodity reading apparatus 20. As an apparatus comprising all the functions of the POS terminal 10 and the commodity reading apparatus 20, a self-checkout apparatus (hereinafter simply referred to as a self-checkout POS) installed in a store such as a supermarket and the like can be listed.

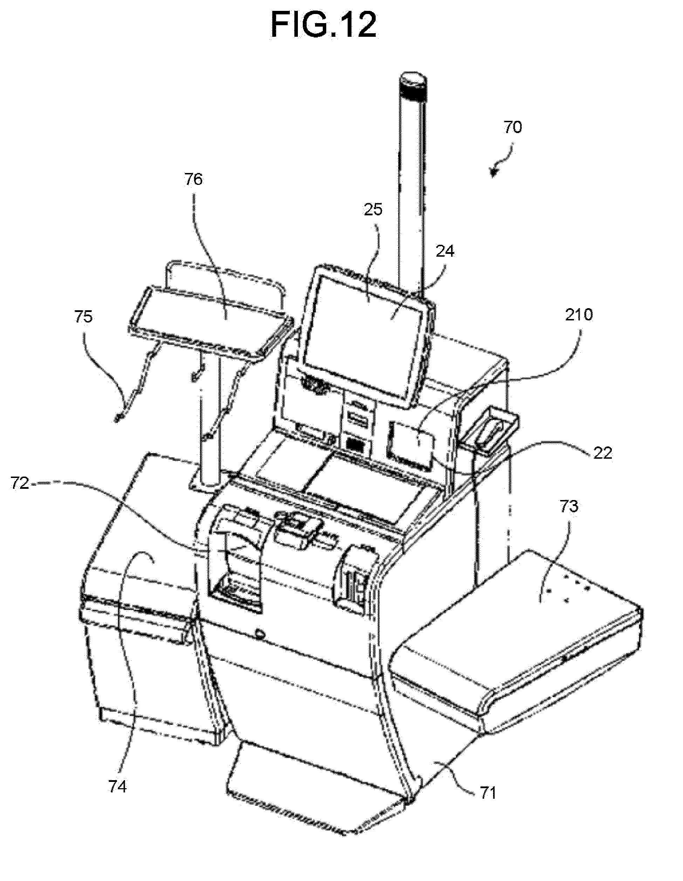

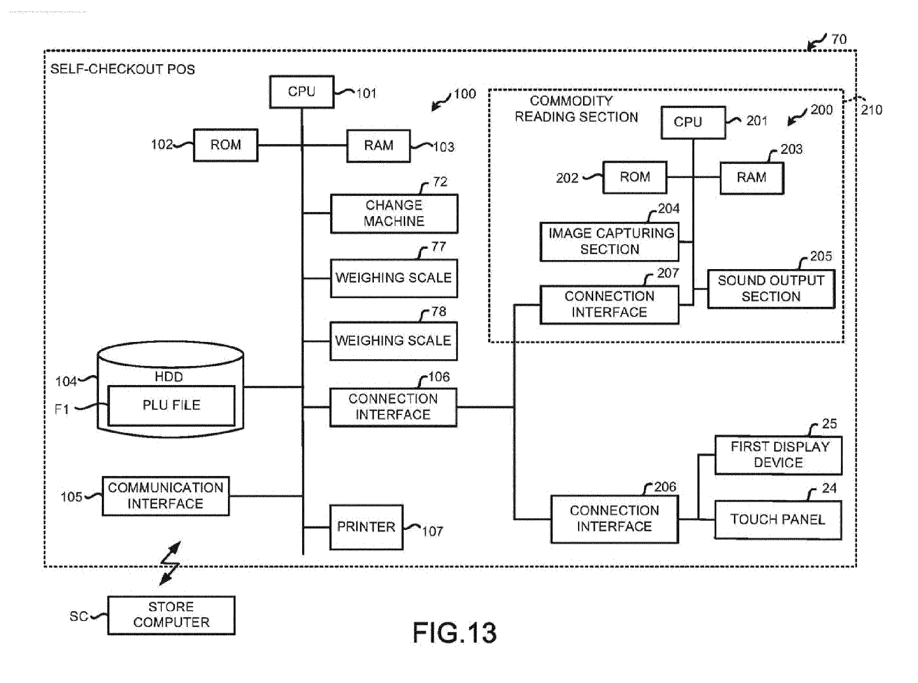

Fig. 12 is a perspective view illustrating the external constitution of the self-checkout POS 70, and Fig. 13 is a block diagram illustrating the hardware constitution of the self-checkout POS 70. Hereinafter, the same numerals are applied to the components similar to that in Fig. 1 and Fig. 2, and therefore the detailed descriptions thereof are not repeated. As shown in Fig. 12 and Fig. 13, a change machine 72 for receiving bill for settlement and discharging bill as change is arranged in a main body 71 of the self-checkout POS 70. The main body 71 of the self-checkout POS 70 comprises a first display device 25 having a touch panel 24 on the surface thereof and a commodity reading section 210 for recognizing (detecting) the category of a commodity.

The first display device 25 may be, for example, a liquid crystal display. The first display device 25 displays a guidance screen for providing customers with a guidance for the operation of the self-checkout POS 70, various input screens, a registration screen for displaying the commodity information captured by the commodity reading section 210, and a settlement screen on which a total amount of the commodities, a deposit amount and a change amount are displayed and a payment method can be selected.

The commodity reading section 210 captures a commodity image through the image capturing section 204 when the customer holds the commodity over the reading window 22 of the commodity reading section 210.

The self-checkout POS 70 includes a commodity placing table 73 for placing a shopping basket (unsettled basket) in which an unsettled commodity G is put at the right side of the main body 71, and another commodity placing table 74 for placing a shopping basket (settled basket) in which a settled commodity G is put after the sales registration thereof is executed at the left side of the main body 71. A bag hook 75 for hooking a bag for receiving the settled commodities G therein and a temporary placing table 76 for placing the settled commodities G temporarily before the settled commodities G are put into a bag are provided on the commodity placing table 74. The commodity placing tables 73 and 74 are equipped with weighing scales 77 and 78 respectively, and are therefore capable of confirming whether or not the weight of commodity G (commodity taken out of the unsettled basket and commodity put into the settled basket) is the same before and after a settlement of the commodity is executed.

In a case in which the self-checkout POS 70 having such constitutions as described above is applied to the store system, the self-checkout POS 70 functions as an information processing apparatus.

Further, in the embodiment above, the programs executed by each apparatus are pre-installed in the storage medium (ROM or storage section) of each apparatus; however, the present invention is not limited to this, and the programs may be recorded in a computer-readable recording medium such as CD-ROM, flexible disk (FD), CD-R, DVD (Digital Versatile Disk) in the form of installable or executable file. Further, the storage medium, which is not limited to a medium independent from a computer or an incorporated system, further includes a storage medium for storing or temporarily storing the downloaded program transferred via an LAN or the Internet.

In addition, the programs executed by each apparatus described in the embodiment above may be stored in a computer connected with a network such as the Internet to be provided through a network download or distributed via a network such as the Internet.

## Claims

1. An information processing apparatus, comprising:
a storage module configured to store elimination information representing the feature of a non-target object, different from a prescribed target object, which is contained in an image capturing range of an image capturing module for photographing the prescribed target object;
an elimination module configured to eliminate an area specified with the elimination information stored in the storage module from an image obtained by photographing the target object with the image capturing module;
an extraction module configured to extract a feature amount of the image from which the area is eliminated; and
a dictionary registration module configured to register the feature amount extracted by the extraction module in a dictionary as a reference data.

2. The information processing apparatus according to claim 1, wherein the storage module stores a color gamut representing the non-target object as the elimination information.

3. The information processing apparatus according to claim 2, wherein the elimination module is configured to eliminate an area represented by the color gamut stored in the storage module from an image captured by photographing the target object.

4. The information processing apparatus according to claim 3, further comprising:
a reception module configured to receive a designation on a color gamut from the image captured by the image capturing module; and
an elimination color gamut registration module configured to register the color gamut received by the reception module in the storage module as the elimination information.

5. The information processing apparatus according to any one of claims 2 to 4, wherein a color gamut representing the non-target object is in a complementary relation with a color gamut representing the target object.

6. The information processing apparatus according to any one of claims 1 to 5, wherein the storage module stores a background image representing a background of the image capturing range as the elimination information and the elimination module eliminates an area corresponding to the background from an image captured by photographing the target object based on the background image stored in the storage module.

7. An information processing method, including:
storing elimination information representing the feature of a non-target object, different from a prescribed target object, which is contained in an image capturing range of an image capturing module for photographing the prescribed target object;
eliminating an area specified with the stored elimination information from an image obtained by photographing the target object;
extracting a feature amount of the image from which the area is eliminated; and
registering the extracted feature amount in a dictionary as a reference data.

8. The information processing method according to claim 7, wherein a color gamut representing the non-target object is stored as the elimination information at the step of storing elimination information

9. The information processing method according to claim 8, wherein an area represented by the color gamut stored at the step of storing elimination information is eliminated from an image captured by photographing the target object at the eliminating step.

10. The information processing method according to claim 9, further comprising receiving a designation on a color gamut from the image captured by the image capturing module and registering the color gamut received at the receiving step as the elimination information.

11. The information processing method according to any one of claims 8 to 10, wherein a color gamut representing the non-target object is in a complementary relation with a color gamut representing the target object.

12. The information processing method according to any one of claims 7 to 11, wherein a background image representing a background of the image capturing range as the elimination information is stored at the storing step and an area corresponding to the background from an image captured by photographing the target object based on the background image stored in the storage module is eliminated at the eliminating step.
